# EUROPEAN PATENT APPLICATION

(11) **EP 4 138 479 A1**
(43) Date of publication of application: **22.02.2023**
(21) Application number: 20934837.4
(22) Date of filing: 08.05.2020
(51) Int. Cl.: H04W 72/04

(54) **RESOURCE SELECTION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); LIN, Huei-Ming, South Yarra, Victoria 3141 (AU)
(74) Representative: RGTH
(86) International application number: PCT/CN2020/089264
(87) International publication number: WO 2021/223240

(57) **Abstract**

Disclosed are a resource selection method and apparatus, and a device and a storage medium, which belong to the technical field of communications. The method comprises: determining a first resource selection window in a first time-domain unit; performing resource elimination on transmission resources in the first resource selection window according to a first resource elimination condition, wherein the first resource elimination condition comprises a first channel detection result and/or a first information monitoring result; and selecting, from among first remaining transmission resources, candidate transmission resources for transmitting communication information, wherein the first remaining transmission resources comprise the remaining transmission resources after resource elimination in the first resource selection window. Provided is a means for a terminal device to select resources when sidelink transmission is performed on the basis of an unlicensed spectrum. In addition, in the embodiments of the present application, the resource elimination condition comprises the channel detection result and/or the information monitoring result, such that the communication reliability can be improved.

## Description

### TECHNICAL FIELD

Embodiments of the disclosure relate to the field of communication technologies, and in particular to a method and apparatus for resource selection, a device, and a storage medium.

### BACKGROUND

Different from a traditional cellular system in which communication data is received or transmitted by an access network device. Sidelink (SL) transmission refers to direct communication data transmission between terminal devices through an SL.

With respect to the SL transmission, the 3rd Generation Partnership Project (3GPP) defines two transmission modes: mode A and mode B. Mode A: transmission resources of an SL User Equipment (UE) are assigned by the access network device. The SL UE transmits communication data on the SL according to the transmission resources assigned by the access network device. The access network device may not only allocate transmission resources for a single transmission to the SL UE, but also allocate the transmission resources for semi-static transmission to the SL UE. Mode B: the SL UE selects transmission resources from a resource pool to transmit communication data. The SL LTE may select the transmission resources from the resource pool in a manner of listening, or select the transmission resource from the resource pool in manner of random selection.

However, how to select the transmission resources for the SL LTE to transmit the communication data needs to be further discussed and researched.

### SUMMARY

The embodiments of the disclosure provide a method and apparatus for resource selection, a device, and a storage medium. Technical solutions are as follows.

In an aspect, the embodiments of the disclosure provide a method for resource selection, which is applied to a terminal device that performs SL transmission on an unlicensed spectrum. The method includes the following operations.

A first resource selection window is determined at a first time domain unit.

Resource exclusion is performed on transmission resources in the first resource selection window according to a first resource exclusion condition. The first resource exclusion condition includes at least one of a first channel detection result or a first information listening result.

Candidate transmission resources used for transmitting communication information are selected from first remaining transmission resources. The first remaining transmission resources include remaining transmission resources in the first resource selection window after the resource exclusion.

In another aspect, the embodiments of the disclosure provide an apparatus for resource selection, which is arranged in a terminal device performing SL transmission on an unlicensed spectrum. The apparatus includes: a first selection window determination module, a first resource exclusion module, and a candidate resource selection module.

The first selection window determination module is configured to determine a first resource selection window at a first time domain unit.

The first resource exclusion module is configured to perform resource exclusion on transmission resources in the first resource selection window according to a first resource exclusion condition. The first resource exclusion condition includes at least one of a first channel detection result or a first information listening result.

The candidate resource selection module is configured to select candidate transmission resources used for transmitting communication information from first remaining transmission resources. The first remaining transmission resources include remaining transmission resources in the first resource selection window after the resource exclusion.

In yet another aspect, the embodiments of the disclosure provide a terminal device. The terminal device includes: a processor, and a transceiver connected to the processor.

The processor is configured to determine a first resource selection window at a first time domain unit.

The processor is further configured to perform resource exclusion on transmission resources in the first resource selection window according to a first resource exclusion condition. The first resource exclusion condition includes at least one of a first channel detection result or a first information listening result.

The processor is further configured to select candidate transmission resources used for transmitting communication information from first remaining transmission resources. The first remaining transmission resources include remaining transmission resources in the first resource selection window after the resource exclusion.

In yet another aspect, the embodiments of the disclosure provide a computer readable storage medium storing a computer program. The computer program is executed by a processor of a terminal device to implement the abovementioned method for resource selection.

In still another aspect, the embodiments of the disclosure further provide a chip. The chip includes a programmable logic circuit and/or program instructions. The chip is configured to implement the abovementioned method for resource selection when running on a terminal device.

The technical solutions provided by the embodiments of the disclosure may include the following beneficial benefits.

The resource selection window is determined by the terminal device that performs SL transmission on an unlicensed spectrum, resource exclusion is performed on transmission resources in the resource selection window according to a resource exclusion condition, and then candidate transmission resources are selected from remaining transmission resources in the resource selection window after the resource exclusion. A manner for the terminal device to perform resource selection in a case that the SL transmission is performed on the basis of the unlicensed spectrum is provided. In addition, in the embodiments of the disclosure, the resource exclusion condition includes a channel detection result and/or an information listening result. The channel detection result is a result obtained by the terminal device detecting a transmission channel. The resource exclusion is performed according to the channel detection result, which can prevent the candidate transmission resources selected by the terminal device from being unable to transmit communication information due to a fact that the transmission channel is busy and the like, so that the communication reliability is improved. The information listening result is a result obtained by the terminal device listening for communication packets transmitted by a communications device in a heterosystem. The transmission resources occupied by the communication device in the heterosystem may be determined by listening for the communication packets in the heterosystem. The resource exclusion is performed according to the information listening result, which can prevent the resource collision between the candidate transmission resources selected by the terminal device and the transmission resources occupied by the communication device in the heterosystem, so that the communication reliability can further be improved.

### BRIEF DESCRIPTION OF THE DRAWINGS

In order to describe the technical solutions in the embodiments of the disclosure more clearly, the drawings required to be used in descriptions about the embodiments will be simply introduced below. Apparently, the drawings in the following descriptions are only some embodiments of the disclosure. Those of ordinary skill in the art may further obtain other drawings according to these drawings without creative work.
FIG. 1 is a schematic diagram of network architecture according to an embodiment of the disclosure.
FIG. 2 is a schematic diagram of a physical layer structure of an SL according to an embodiment of the disclosure.
FIG. 3 is a schematic diagram of time frequency resource location reservation according to an embodiment of the disclosure.
FIG. 4 is a schematic diagram of resource listening to and resource selection according to an embodiment of the disclosure.
FIG. 5 is a schematic diagram of a resource exclusion process according to an embodiment of the disclosure.
FIG. 6 is a schematic diagram of a Listen Before Talk (LBT) mechanism according to an embodiment of the disclosure.
FIG. 7 is a flowchart of a method for resource selection according to an embodiment of the disclosure.
FIG. 8 is a flowchart of a resource exclusion method according to an embodiment of the disclosure.
FIG. 9 is a schematic diagram of a resource selection process according to an embodiment of the disclosure.
FIG. 10 is a flowchart of a resource re-evaluation method according to an embodiment of the disclosure.
FIG. 11 is a schematic diagram of a resource re-evaluation process according to an embodiment of the disclosure.
FIG. 12 is a schematic diagram of a resource re-evaluation process according to another embodiment of the disclosure.
FIG. 13 is a block diagram of an apparatus for resource selection according to an embodiment of the disclosure.
FIG. 14 is a block diagram of an apparatus for resource selection according to another embodiment of the disclosure.
FIG. 15 is a structural block diagram of a terminal device according to an embodiment of the disclosure.

### DETAILED DESCRIPTION

In order to make the objectives, technical solutions, and advantages of the disclosure clearer, implementations of the disclosure will be further described in detail with reference to the drawings.

Network architecture and service scenarios described in the embodiments of the disclosure are intended to describe the technical solutions of the embodiments of the disclosure more clearly, but are not intended to limit the technical solutions provided in the embodiments of the disclosure. Those of ordinary skill in the art may know that as the network architecture evolves and new service scenarios emerge, the technical solutions provided in the embodiments of the disclosure are also applicable to a similar technical problem.

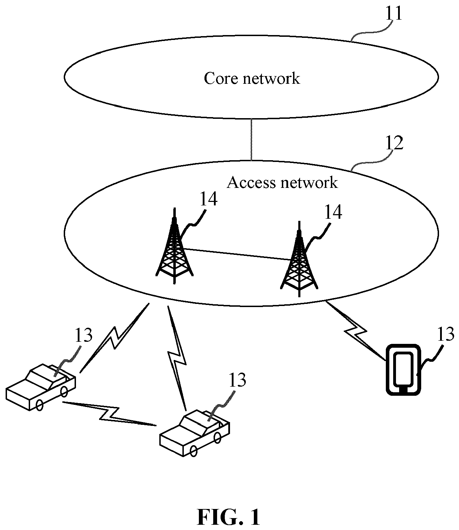

Reference is made to FIG. 1, which illustrates a schematic diagram of network architecture according to an embodiment of the disclosure. The network architecture may include: a core network 11, an access network 12, and a terminal 13.

The core network 11 includes a plurality of core network devices. The function of the core network device is mainly to provide user connection, management of users, and complete the bearing of services, and is provided to an interface of an external network as a bearer network. For example, a core network of a 5th Generation (5G) New Radio (NR) system may include devices, such as an Access and Mobility Management Function (AMF) entity, a User Plane Function (UPF) entity, and a Session Management Function (SMF) entity.

The access network 12 includes a plurality of access network devices 14. The access network in the 5G NR system may be called a New Generation-Radio Access Network (NG-RAN). The access network device 14 is an apparatus that is deployed in the access network 12 and is configured to provide a wireless communication function for a terminal device 13. The access network device 14 may include various forms of macro base stations, micro base stations, relay nodes, access points, and the like. In systems using different radio access technologies, devices having the function of an access network device may have different names, for example, called gNodeB or gNB in the 5G NR system. With the evolution of communication technologies, the name "access network device" may change. In order to facilitate description, in the embodiments of the disclosure, apparatuses that provide a wireless communication function of the abovementioned terminal device 13 are collectively referred to as the access network devices.

There are usually a plurality of terminal devices 13. One or more terminal devices 13 may be distributed in a cell managed by each access network device 14. The terminal device 13 may include various hand-held devices, on-board devices, wearable devices, or computing devices that have the wireless communication function, or other processing devices connected to a wireless modem, and various forms of user equipments, Mobile Stations (MS), etc. In order to facilitate description, the devices mentioned above are collectively referred to as terminal devices. The access network device 14 and the core network device communicate with each other by using a certain air technology, such as an NG interface in the 5G NR system. The access network device 14 and the terminal device 13 communicate with each other by using a certain air technology, such as a Uu interface.

The terminal devices 13 (such as an on-board device and other devices (such as other on-board devices, mobile phones, Road Side Units (RUSs))) may communicate with each other through a direct communication interface (such as a PC5 interface). Correspondingly, the communication link established on the basis of the direct communication interface may be called a direct link or an SL. SL transmission is the direct communication data transmission between terminal devices through the SL. Different from receiving or transmitting communication data through an access network device in a traditional cellular system, the SL transmission has the characteristics of short delay, small overhead, and the like, and is suitable for the communication between two terminal devices (such as an on-board device and another peripheral device with close geographical locations) with close geographical locations.

The "5G NR system" in the embodiments of the disclosure may also be referred to as a 5G system or an NR system. However, those skilled in the art can understand its meaning. The technical solutions described in the embodiments of the disclosure may be applied to the 5G NR system, and may also be applied to a subsequent evolution system of the 5GNR system.

With respect to the SL transmission, the 3GPP defines two transmission modes: mode A and mode B. Mode A: transmission resources of a UE are assigned by the access network device. The SL UE transmits communication data on the SL according to the transmission resources assigned by the access network device. The access network device may not only allocate transmission resources for a single transmission to the SL LTE, but also allocate the transmission resources for semi-static transmission to the SL UE. Mode B: the SL UE selects transmission resources from a resource pool to transmit communication data. The SL UE may select the transmission resources from the resource pool in a manner of listening, or select the transmission resource from the resource pool in manner of random selection.

In an example, for the abovementioned mode B, the SL LTE autonomously selects transmission resources in a resource pool on the basis of resource reservation, resource listening, and resource exclusion. The resource reservation, the resource listening, and the resource exclusion are described below.

Firstly, a physical layer structure of the SL is described.

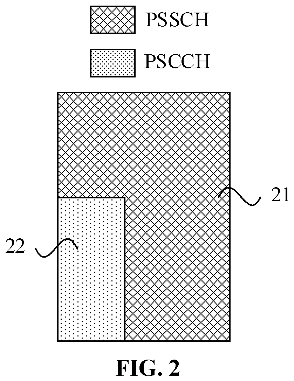

Reference is made to FIG. 2, which illustrates a schematic diagram of a physical layer structure of an SL according to an embodiment of the disclosure. In FIG. 2, a physical channel 21 is a Physical Sidelink Shared Channel (PSSCH). The PSSCH carries communication data for SL communication. A physical channel 22 is a Physical Sidelink Control Channel (PSCCH). The PSCCH carries control information for the SL communication. It can be seen from FIG. 2 that the physical channel 22 is included in the physical channel 21, which means that the control information carried in the PSCCH and the communication data carried in the PSSCH are simultaneously transmitted in the SL transmission.

Secondly, resource reservation is described.

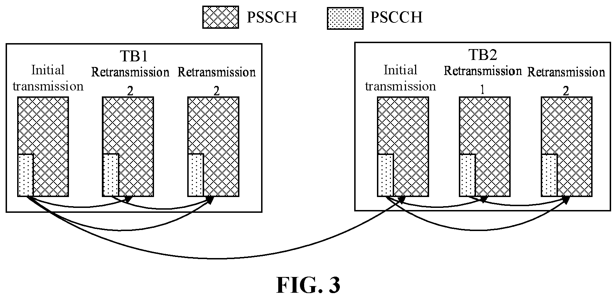

The SL LTE may perform resource reservation by transmitting SL control information in the abovementioned PSCCH. The SL UE may indicate transmission resources reserved for a current Transport Block (TB) through two domains of "time resource assignment" and "frequency resource assignment" in the SL control information. As shown in FIG. 3, the SL UE transmits the SL control information in the PSCCH used by initial transmission of TB 1, and indicates time-frequency resource locations reserved for retransmission 1 and retransmission 2 of TB 1 to other LTEs by using the abovementioned two domains. Limited by the signaling overhead and bit number of the SL control information, the abovementioned two domains can only indicate three time-frequency resource locations (including the current time-frequency resource location) reserved for the current TB at most. As shown in FIG. 3, the SL control information transmitted during the initial transmission of TB 1 at most indicates the time-frequency resource locations reserved for the initial transmission, the retransmission 1, and the retransmission 2 of TB 1 in TB 1.

In addition, the SL UE indicates a time-frequency resource location reserved for the next TB through a domain of "resource reservation period" in the SL control information. As shown in FIG. 3, the SL UE transmits the SL control information in the PSCCH used by the initial transmission of TB 1, and indicates an interval between the initial transmission of TB 2 and the initial transmission of TB 1 to other UEs by using the abovementioned domain of "resource reservation period". Furthermore, a protocol predefines that the time-frequency resource locations of the initial transmission of TB 1 and the initial transmission of TB 2 are the same, so that the SL UE may indicate a time-frequency resource location reserved for the initial transmission of TB 2 through the SL control information transmitted during the initial transmission of TB 1.

In addition, the protocol predefines that the "resource reservation period" domain in the SL control information transmitted by the SL UE in the PSCCH used by the initial transmission, the retransmission 1, and the retransmission 2 of TB 1 will not change, so that the time interval between a time resource location reserved for the initial transmission of TB 1 and a time resource location reserved for the initial transmission of TB 2, the time interval between a time resource location reserved for the retransmission 1 of TB 1 and a time resource location reserved for the retransmission 1 of TB 2, and the time interval between a time resource location reserved for the retransmission 2 of TB 1 and a time resource location reserved for the retransmission 2 of TB 2 in FIG. 3 are the same. Furthermore, the SL control information transmitted by the SL UE during the initial transmission of TB 1 will also indicate the time-frequency resource locations reserved for the retransmission 1 and the retransmission 2 of TB 1. Therefore, the SL control information transmitted by the SL UE during the initial transmission of TB 1 indirectly indicates the time-frequency resource locations reserved for the retransmission 1 and the retransmission 2 of TB 2.

By analogy, the description that the SL control information transmitted by the SL UE in the PSCCH used in the retransmission 1 of TB 1 indicates the time-frequency resource location reserved for the retransmission 2 of TB 1 and the time-frequency resource locations reserved for the retransmission 1 and the retransmission 2 of TB 2 may refer to the above description of the SL control information transmitted by the SL UE in the PSCCH used in the initial transmission of TB 1, which will not be elaborated herein.

The configuration of a resource pool used by the SL UE includes a configured or pre-configured resource reservation period set M. The SL UE selects one resource reservation period from the resource reservation period set M and places the selected resource reservation period into the "resource reservation period" domain corresponding to the SL control information, so that resource reservation between TBs can be performed. In an NR SL, the value of the resource reservation period may be 0 millisecond (ms), [1, 99] ms, 100 ms, 200 ms, 300 ms, 400 ms, 500 ms, 600 ms, 700 ms, 800 ms, 900 ms, and 1000 ms. The resource reservation period set M in the configuration of the resource pool is composed of k of the abovementioned possible values, and k is a positive integer. Exemplarily, k is equal to 16.

Thirdly, resource listening to and resource exclusion are described.

The SL UE that performs resource selection may determine the time-frequency resource locations reserved by other LTEs for a TB by listening for the SL control information transmitted by other UEs in the PSCCH, and may avoid the resource collision by excluding the time-frequency resource locations in the resource selection window that are reserved by other UEs for the TB.

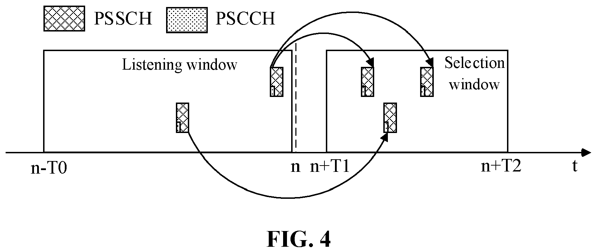

As shown in FIG. 4, a communication data packet arrives at time slot n, the resource selection needs to be performed. It is assumed that all resources in the resource selection window is taken as a set A. The resource selection window starts from time slot n+T1 and ends at time slot n+T2. T1 is greater than or equal to 0, and T1 is less than or equal to Tproc,1. Tproc,1 is the time for the SL UE to select the resources and prepare data. T2 is greater than or equal to T2min, and T2 is less than or equal to a delay requirement range of a service. The value of T2min is {1, 5, 10, 20}^{∗}2µ time slots. Where µ = 0, 1, 2, 3 respectively correspond to the cases that subcarrier intervals are 15, 30, 60, 120 Kilo Hertz (KHz). When T2min is greater than the delay requirement range of the service, T2 may be equal to the delay requirement range of the service. It is to be noted that the delay requirement range of the service is relative to the time slot in which a communication data packet arrives. For example, the communication data packet arrives at time slot n, the delay requirement range of the service is 50. If the resource selection is performed at time slot n, then the delay requirement range of the service that T2 needs to meet is 50. If the resource selection is performed at time slot n+20, the delay requirement range of the service that T2 needs to meet is 30.

As shown in FIG. 4, the SL LTE performs resource listening from time slot n-T0 to time slot n-Tproc,0. The value of T0 is 100 ms or 1100 ms. Tproc,0 is the time that the SL LTE decodes the SL control information.

A process of resource selection by the SL UE is as follows. The process may be divided into two steps.

Step 1: If the SL UE transmits data at some time slots in a resource listening window and does not perform listening, all transmission resources on the time slots corresponding to the time slots in a resource selection window are excluded. For example, if the SL UE does not perform resource listening at time slot tm, and assuming that the configuration of the resource pool used by the SL UE includes the resource reservation period set M={ 100, 200, 300, 400, 500, 600, 700, 800} ms, the SL UE will calculate that whether the time slots, tm+100ms, tm+200ms, tm+300ms, tm+400ms, tm+500ms, tm+600ms, tm+700ms, and tm+800ms, are in the resource selection window. Assuming that the time slots, tm+100ms, tm+200ms, tm+300ms, tm+400ms, and tm+500ms, are in the resource selection window, then the SL UE excludes all transmission resources on these time slots from the set A.

If the SL UE detects the control information transmitted in the PSCCH in the listening window, Reference Signal Received Power (RSRP) of the PSCCH or the RSRP of the PSSCH scheduled by the PSCCH (that is, the RSRP of the PSSCH that transmits simultaneously with the PSCCH) is measured. If the measured RSRP is greater than an SL-RSRP threshold, and the transmission resources reserved for TB are determined within the resource selection window according to the resource reservation information ("time resource assignment", "frequency resource assignment", and "resource reservation period") in the SL control information transmitted in the PSCCH, then the corresponding transmission resources are excluded from the set A. If the remaining transmission resources in the set A are less than X% of all transmission resources before resource exclusion, such as 20%, then the SL UE increases the SL-RSRP threshold by 3 dB, and step 1 is performed again.

A point to be noted is that whether the measured RSRP of the PSCCH or the RSRP of the PSSCH scheduled by the PSCCH is used for comparing with the SL-RSRP threshold depends on the configuration of the resource pool used by the SL UE. The configuration of the resource pool is configured or pre-configured by a network device.

Step 2: After the resource exclusion, the SL UE may randomly select a plurality of transmission resources from the set A as transmission resources used for the initial transmission and retransmission of the SL UE.

A point to be noted is that the abovementioned RSRP threshold is determined by a priority P1 carried in the PSCCH listened by the SL UE and a priority P2 of the data to be transmitted by the SL LTE. The SL LTE obtains an SL-RSRP threshold table through network device configuration or pre configuration. The SL-RSRP threshold table includes SL-RSRP thresholds corresponding to all priority combinations. For example, as shown in the following Table 1, assuming that the optional values of the priorities of P1 and P2 are both 0 to 7, the SL-RSRP thresholds corresponding to different priority combinations are represented by γᵢⱼ, where i in the γᵢⱼ is the value of the priority P1, and j is the value of the priority P2.

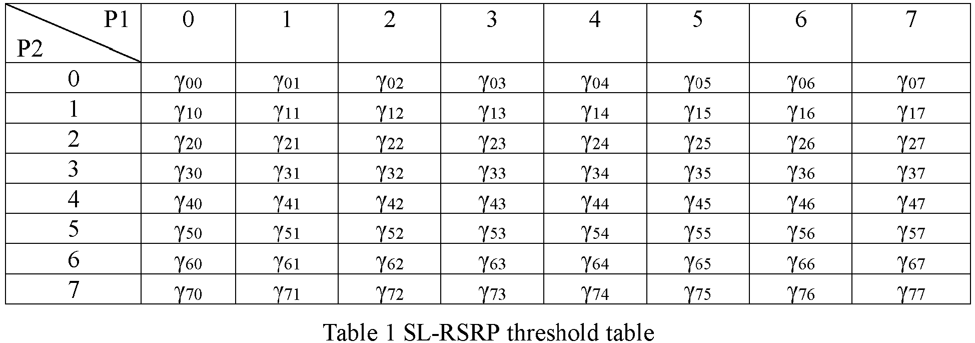

When the SL UE detects the control information transmitted by other UEs in PSCCH, the priority P1 carried in SL control information transmitted in the PSCCH and the priority P2 of the data to be transmitted are obtained, and the SL UE may determine the SL-RSRP threshold by querying the abovementioned Table 1.

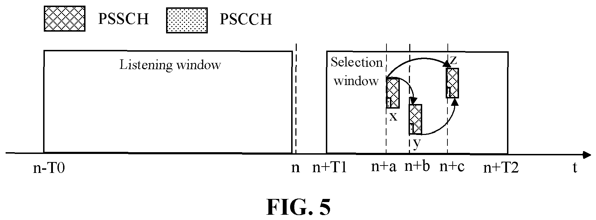

In addition, the NR SL also supports resource re-evaluation of the resources that have been selected and not indicated by transmitting the SL control information after performing resource selection and before transmitting the SL control information to perform resource reservation. For example, as shown in FIG. 5, the SL UE generates data at time slot n, and determines a resource listening window and a resource selection window to perform resource selection, and the SL UE selects an initial transmission resource x on time slot n+a, and retransmission resources y and x on time slots n+b and n+c. The SL UE transmits first SL control information at time slot n+a to perform resource reservation, so that the transmission resources x, y, and z are not indicated by the SL control information transmitted by the SL UE before the time slot n+a. After time slot n, the SL UE will still listen for the PSCCH continuously. In addition, the SL UE performs the resource exclusion process of the abovementioned step 1 for at least one time at the time slot n+a-T3. T3 is the time required by the SL UE to perform resource selection. If the transmission resources x, y, and z are still in a candidate resource set after the resource exclusion, resource re-evaluation does not need to be performed. Otherwise, the SL UE performs resource re-evaluation on the resource of the transmission resources x, y, and z that is not in the candidate resource set or performs resource re-evaluation on all selected transmission resources x, y, and z.

In addition, in the NR SL, a resource preemption mechanism is also supported. That is, after the SL LTE transmits the SL control information to reserve the transmission resources, whether there is an overlap (including full overlap or partial overlap) between resources reserved by a user with high priority and transmission resources reserved by the SL UE still needs to be determined, if so, the corresponding transmission resources are re-selected.

As shown in FIG. 5, the SL UE selects the transmission resources x, y, and z at time slot n. After the SL LTE transmits the initial transmission and reserves the transmission resources y and z at time slot n+a, the PSCCH will still be listened for continuously. If the SL UE finds that there is an overlap (full overlap or partial overlap) between the transmission resources reserved by other LTEs with high priority and the transmission resource y or z, and the measured PSCCH-RSRP or PSSCH-RSRP is greater than the SL-RSRP threshold, the SL UE performs resource re-evaluation on the transmission resource overlapping with the transmission resources reserved by the LTE with high priority. Here, the SL-RSRP threshold is also determined by the priority P1 in the PSCCH listened by the SL LTE and the priority P2 of the data to be transmitted by the SL UE.

A point to be noted is that the SL-RSRP thresholds may be the same or may be different in three cases that the abovementioned SL UE performs resource selection at time slot n, performs resource selection during resource re-evaluation, and performs resource selection on the resources reserved by the LTE with high priority.

The above is an example that the SL LTE selects and reserves transmission resources in a resource pool on the basis of a licensed spectrum. However, for an unlicensed spectrum, the protocol has no relevant definition on how the SL UE selects and reserves transmission resources. The unlicensed spectrum and how the terminal device transmits communication data on the basis of the unlicensed spectrum are described below.

Firstly, the unlicensed spectrum is described.

The unlicensed spectrum is a spectrum that can be used for the communication of the terminal device. The spectrum is generally considered as a shared spectrum, that is, the terminal devices in different communication systems can use the spectrum as long as they meet the requirements set on the spectrum, and there is no need to additionally apply for exclusive spectrum license.

The requirements set on the spectrum limit the bandwidth of the terminal device transmitting on the unlicensed spectrum, that is, the span of the bandwidth occupied by the terminal device when transmitting communication data is at least L% of the total spectral bandwidth, where L is a positive number. For example, L is equal to 80. Assuming that the total bandwidth of the unlicensed spectrum is 100 Physical Resource Blocks (PRBs), then the difference between the lowest PRB index and the highest PRB index is at least 80 PRBs when the terminal device transmits the communication data. If the terminal device needs 2 PRBs to transmit data, an index of one PRB is PRB 1, and an index of the other PRB is at least PRB 81. In some cases, for example, in a case of initial access, the bandwidth occupied by the terminal device transmitting data is at least 2 MHz.

Secondly, an LBT mechanism is described.

On the unlicensed spectrum, all terminal devices need to perform LBT before transmitting communication data. That is, a terminal device needs to perform channel listening before performing data transmission on an unlicensed spectrum-based transmission channel, and the terminal device can transmit a signal only in a case that a channel listening result is that the channel is idle.

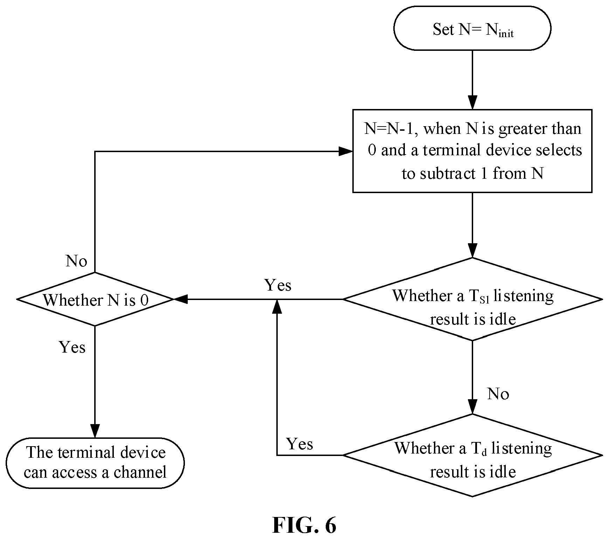

Reference is made to FIG. 6, which illustrates a schematic diagram of the LBT mechanism according to an embodiment of the disclosure. In the LBT mechanism, the communication device first sets N=Ninit. Ninit is an equal probability random value from 0 to CWp. CWp is related to the priority of the access channel of the terminal device. The following Table 2 shows the value ranges of different CWₚ corresponding to the priorities of different access channels.

**Table 2 Relationship between priorities of access channels and values of communication related parameters**

| Priority of access channel (p) | mₚ | CW_{min,p} | CW_{max,p} | T_{mcot,p} | Allowable CWₚ values |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

As shown in FIG. 6, when N>0 and the terminal device selects to perform an operation of subtracting 1 from N, N=N-1. The terminal device performs the listening with the length of Tsl on the channel. The length of Tsl is 9 microseconds. If it is listened to that the channel in Tsl is busy (that is, there are other terminal devices transmitting communication data), the terminal device continuously listens to the channel. When the channel listening result is idle in the period with the length of Td, the terminal device determines whether N is 0, that is, determines whether the LBT is successful or not. When the terminal device needs to transmit data and N is not 0, the LBT fails. Where Td=Tf+mp*Tsl, Tf is equal to 16 microseconds, and mp is related to the channel access priority, which can be queried from Table 2.

When N=0, that is, the LBT is successful, if the terminal device does not access the channel immediately, and when the terminal device needs to transmit communication data and access the channel, the abovementioned all LBT process does not need to be performed again, and only the channel occupancy of Td + the period of at least one Tsl needs to be listened. If the channel is idle, the terminal device may directly access the channel to transmit communication data. Otherwise, if the channel is busy, the LBT fails, and the terminal device cannot access the channel to transmit communication data. When the LBT of the terminal device is successful and the terminal device accesses the channel, the time that the terminal device can occupy the channel is referred to as Channel Occupancy Time (COT). Exemplarily, the length of the COT can be up to 20 ms. In the COT, the terminal device may transmit communication data continuously or transmit communication data discontinuously, but the total transmission time does not exceed Tmcot,p, where Tmcot,p is related to the channel access priority, which may also be queried from the abovementioned Table 2.

It can be seen from the abovementioned example that the resource selection mechanism, the resource re-evaluation mechanism, and the resource preemption mechanism all involve resource exclusion and resource selection. When the NR SL is applied to the licensed spectrum, the SL LTE performs resource exclusion according to the SL control information transmitted by other terminal devices. That is, the transmission resources reserved by other terminal devices in a resource selection window are excluded, and candidate transmission resources used for transmitting communication information are selected from remaining transmission resources, which can avoid resource collision in an SL system. However, when the NR SL is applied to the unlicensed spectrum, the unlicensed spectrum is not only used by the NR SL system but also other communication systems, because the unlicensed spectrum is not limited to be used by a certain determined communication system. Therefore, how to perform resource exclusion and resource selection to avoid the resource collision between the NR SL system and other communication systems needs to be further discussed and researched. In addition, when the NR SL is applied to the unlicensed spectrum, the SL UE needs to perform the LBT before transmitting communication data. If the LBT fails, the SL UE cannot transmit communication data. Therefore, how to perform resource exclusion and resource selection to avoid the case that the SL LTE cannot transmit communication data also needs to be further discussed and researched.

On this basis, the embodiments of the disclosure provide a method for resource selection. According to the method, the SL UE may perform resource selection in a case that SL transmission is performed on the basis of the unlicensed spectrum. Technical solutions of the disclosure are described below through several exemplary embodiments.

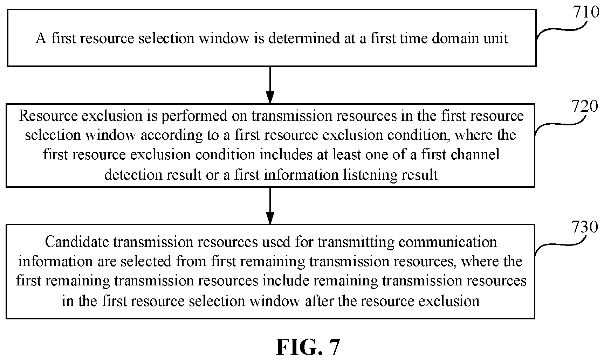

Reference is made to FIG. 7, which illustrates a flowchart of a method for resource selection according to an embodiment of the disclosure. The method may be applied to the network architecture as shown in FIG. 1, for example, applied to a terminal device that performs SL transmission on the unlicensed spectrum. The method may include the following operations.

At operation 710, a first resource selection window is determined at a first time domain unit.

Before performing the SL transmission, the terminal device needs to select transmission resources that can be used for the SL transmission, to avoid the resource collision with the transmission resources selected by other terminal devices. During resource selection, the terminal device may determine a resource selection window, and then select transmission resources from the resource selection window. The range of the time-frequency resource occupied by the resource selection window may refer to the abovementioned method embodiments, which will not be elaborated herein. In the embodiments of the disclosure, in order to facilitate description, the terminal device that performs the SL transmission on the unlicensed spectrum is referred to as an SL LTE.

The first time domain unit is a time domain unit that triggers the SL LTE to perform resource selection. In the embodiments of the disclosure, the SL UE determines the first resource selection window at the first time domain unit. Optionally, the first time domain unit is a time domain unit where a communication data packet arrives. The embodiments of the disclosure do not limit the expression form of the time domain unit. Optionally, the time domain unit is a time slot, or the time domain unit is a symbol in the time slot. Optionally, the range of the time domain resource occupied by the first resource selection window is located after the first time domain unit. For example, the SL UE determines the first resource selection window at time slot n. The range of the time domain resource occupied by the first resource selection window is from time slot n+T1 to time slot n+T2. The description related to the values of T1 and T2 refer to the abovementioned method embodiments, which will not be elaborated herein.

At operation 720, resource exclusion is performed on transmission resources in the first resource selection window according to a first resource exclusion condition. The first resource exclusion condition includes at least one of a first channel detection result or a first information listening result.

The SL LTE determines the first resource selection window, that is, the range of the transmission resources that can be selected starting from the first time domain unit. In the embodiments of the disclosure, when the SL UE performs resource selection, the resource exclusion is performed on the transmission resources in the first resource selection window according to the first resource exclusion condition. The first resource exclusion condition includes the first channel detection result and/or the first information listening result.

The first channel detection result is a result obtained by the SL UE detecting a state of a transmission channel. The first channel detection includes that the channel is busy or the LBT fails, so that the SL UE excludes the transmission resource corresponding to the time domain unit where the LBT may fail or the channel is busy from the first resource selection window according to the first channel detection result, thereby preventing that the transmission resources selected by the SL LTE cannot transmit communication information, and improving the communication reliability.

The first information listening result is a result obtained by the SL UE listening for the communication packets transmitted by a communication device in a heterosystem. The first information listening result includes the transmission resources occupied by the communication device in the heterosystem, so that the SL UE may exclude the transmission resources in the first resource selection window that are occupied by the communication device in the heterosystem according to the first information listening result, thereby avoiding the resource collision between the transmission resources selected by the SL UE and the transmission resources occupied by the communication device in the heterosystem, and further improving the communication reliability.

Optionally, the first resource exclusion condition may further include other contents. For example, the first resource exclusion condition further includes a result obtained by the SL UE listening for the SL control information of other terminal devices in the NR SL system. No limits are made thereto in the embodiments of the disclosure. Specific description related to resource exclusion refers to the following method embodiments, which will not be elaborated herein.

At operation 730, candidate transmission resources used for transmitting communication information are selected from first remaining transmission resources. The first remaining transmission resources include remaining transmission resources in the first resource selection window after the resource exclusion.

After the resource exclusion, the remaining transmission resources in the first resource selection window may be used for a process of transmitting the communication information by the SL UE. In the embodiments of the disclosure, after the resource exclusion, the SL UE selects candidate transmission resources used for transmitting the communication information from the first remaining transmission resources. The first remaining transmission resources include the remaining transmission resources in the first resource selection window after the resource exclusion. No limits are made to the manner of resource selection by the SL UE in the embodiments of the disclosure. Optionally, the SL LTE selects a certain number of candidate transmission resources from the first remaining transmission resources randomly; or the SL UE selects the candidate transmission resources from the first remaining transmission resources according to a certain period.

In conclusion, according to the technical solutions provided by the embodiments of the disclosure, the resource selection window is determined by the terminal device that performs SL transmission on an unlicensed spectrum, resource exclusion is performed on transmission resources in the resource selection window according to a resource exclusion condition, and then candidate transmission resources are selected from remaining transmission resources in the resource selection window after the resource exclusion. A manner for the terminal device to perform resource selection in a case that the SL transmission is performed on the basis of the unlicensed spectrum is provided. In addition, in the embodiments of the disclosure, the resource exclusion condition includes a channel detection result and/or an information listening result. The channel detection result is a result obtained by the terminal device detecting a transmission channel. The resource exclusion is performed according to the channel detection result, which can prevent the candidate transmission resources selected by the terminal device from being unable to transmit communication information due to a fact that the transmission channel is busy and the like, so that the communication reliability is improved. The information listening result is a result obtained by the terminal device listening for communication packets transmitted by a communications device in a heterosystem. The transmission resources occupied by the communication device in the heterosystem may be determined by listening for the communication packets in the heterosystem. The resource exclusion is performed according to the information listening result, which can prevent the resource collision between the candidate transmission resources selected by the terminal device and the transmission resources occupied by the communication device in the heterosystem, so that the communication reliability can further be improved.

The embodiments of the disclosure provide several resource exclusion manners for the process that the SL UE performs resource exclusion on the transmission resources in the first resource selection window in operation 720. These several resource exclusion manners are described below.

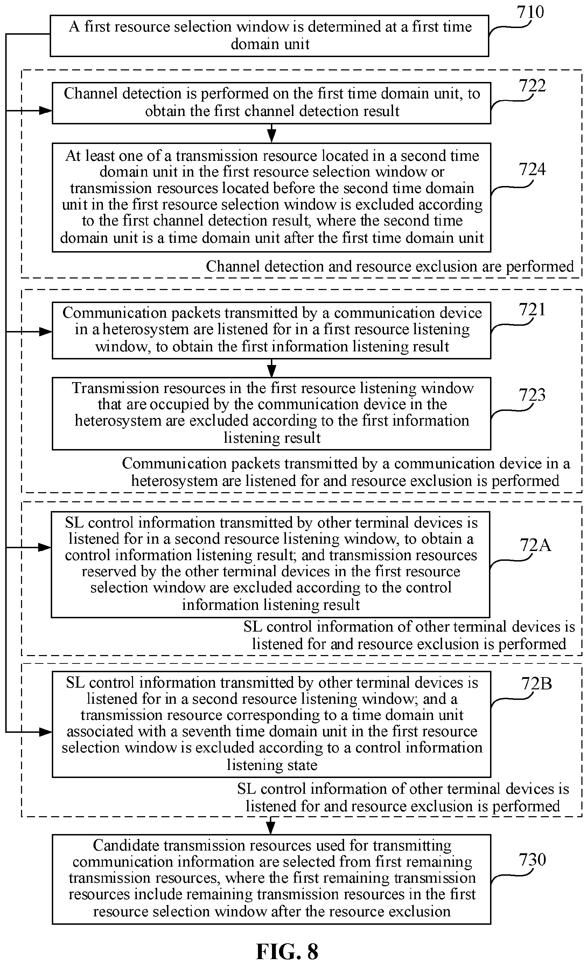

In an example, the abovementioned first resource exclusion condition includes a first channel detection result. As shown in FIG. 8, the abovementioned operation 720 includes following operations.

At operation 722, channel detection is performed on the first time domain unit, to obtain the first channel detection result.

After determining the first resource selection window at the first time domain unit, the SL UE may take the result obtained by detecting the channel at the first time domain unit or before the first time domain unit as the first channel detection result. No limits are made to the channel detection manner in the embodiments of the disclosure. Optionally, the abovementioned channel detection includes LBT, and the abovementioned first channel detection result includes that the LBT fails; and/or the abovementioned channel detection includes channel listening, and the abovementioned first channel detection result includes that the channel is busy. Specific description related to the LBT and LBT failure refers to the above method embodiments, which will not be elaborated herein. Optionally, the abovementioned operation that channel detection is performed on the first time domain unit includes that: the channel detection is performed at at least one of the first time domain unit or a time domain unit before the first time domain unit. In a case that the channel detection is performed at the time domain unit before the first time domain unit, the SL UE may take the channel detection result obtained by the time domain unit before the first time domain unit as a first channel detection result.

For example, assuming that the first time domain unit is time slot n, the SL UE may perform LBT at time slot n or the time domain unit before time slot n, to determine whether the channel at time slot n is busy and whether the SL UE may access the channel at time slot n. If it is determined that the channel at time slot n is busy or the SL LTE cannot access the channel at time slot n, then the first channel detection result is determined as that the LBT fails. For another example, assuming that the first time domain unit is time slot n, the SL LTE may perform channel listening with a listening duration of a first duration at time slot n or the time domain unit before time slot n, take a channel state listened within the first duration as the channel state of time slot n, and determine whether the channel at time slot n is busy or not. If it is determined that the channel at time slot n is busy, then it is determined that the first channel detection result is that the channel is busy.

At operation 724, at least one of a transmission resource located in a second time domain unit in the first resource selection window or transmission resources located before the second time domain unit in the first resource selection window is excluded according to the first channel detection result. The second time domain unit is a time domain unit after the first time domain unit.

After the first channel detection result is obtained, the SL UE may exclude the transmission resource located in the second time domain unit in the first resource selection window and/or the transmission resources before the second time domain unit in the first resource selection window according to the first channel detection result. The second time domain unit is a time domain unit after the first time domain unit. Optionally, since the first channel detection result reflects a channel state, in order to ensure that the SL UE excludes the transmission resource corresponding to a time domain unit where the channel is busy. In the embodiments of the disclosure, the time domain interval between the second time domain unit and the first time domain unit is associated with an upper limit value of the COT on the unlicensed spectrum.

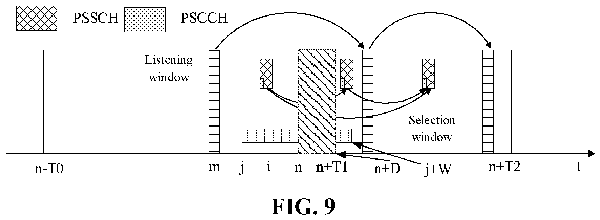

For example, as shown in FIG. 9, the SL UE performs LBT or channel listening on time slot n. In a case that the first channel detection result is that the LBT fails or the channel is busy, the SL UE excludes the transmission resources from time slot n to time slot n+D and/or the transmission resources on time slot n+D. Time slot n is beyond the first resource selection window, so in an actual resource exclusion process, the SL UE excludes the transmission resources before time slot n+D and/or the transmission resources on time slot n+D.

In another example, the abovementioned first resource exclusion condition includes a first information listening result. As shown in FIG. 8, the abovementioned operation 720 includes the following operations.

At operation 721, communication packets transmitted by a communication device in a heterosystem are listened for in a first resource listening window, to obtain the first information listening result.

The first resource listening window is a listening window for SL UE to listen for communication packets transmitted by a communication device in a heterosystem. No limits are made to the determination occasion of the first resource listening window in the embodiments of the disclosure. Optionally, the first resource listening window and the first resource selection window are determined simultaneously; or the first resource listening window is determined before the first resource selection window; or the first resource listening window is determined after the first resource selection window. Optionally, the first resource listening window is identical to a second resource listening window; or the first resource listening window is different from the second resource listening window. The second resource listening window is configured to listen for communication information transmitted by other terminal devices. The other terminal devices are terminal devices located in the same communication system with the SL UE, that is, the other terminal devices are also located in the NR SL system. For example, the second resource listening window is [n-T₁₀, n-T_{proc,0}), then the first resource listening window may be [n-T₁₀, n-T_{proc,0}), or may be [n-T_{q}, n-T_{proc,0}), or the like.

After determining the first resource listening window, the SL UE may perform resource exclusion by using the communication packets listened in the first resource listening window and transmitted by the communication device in the heterosystem. After the communication packets are listened, the SL LTE may perform the processes, such as decoding, on the communication packets, to obtain the first information listening result. Optionally, the first information listening result includes transmission resources occupied by the communication device in the heterosystem. No limits are made to a specific type of the heterosystem in the embodiments of the disclosure. Optionally, the heterosystem includes a Wireless-Fidelity (WiFi) system.

At operation 723, transmission resources in the first resource listening window that are occupied by the communication device in the heterosystem are excluded according to the first information listening result.

After obtaining the first information listening result and determining the transmission resources occupied by the communication device in the heterosystem, the SL UE may exclude the transmission resources in the first resource selection window that are occupied by the communications device in the heterosystem, to avoid the resource collision between the transmission resources selected by the SL UE and the transmission resources occupied by the communication device in the heterosystem.

For example, as shown in FIG. 9, the SL LTE detects the communication packets transmitted by the communication device in the heterosystem at time slot j in the first resource listening window, and the SL UE decodes the communication packets to learn that the communication device in the heterosystem occupies the transmission resources from time slot j to time slot j+w, then the SL LTE excludes the transmission resources from time slot j to time slot j+W. The time slot is beyond the first resource selection window, and the SL UE selects the transmission resources in the first resource selection window when performing resource selection, so the SL LTE actually excludes the part of the transmission resources from time slot j to time slot j+W which is overlap with the first resource selection window.

In yet another example, as shown in FIG. 8, the abovementioned operation 720 includes operation 72A that: SL control information transmitted by other terminal devices is listened for in a second resource listening window, to obtain a control information listening result; and transmission resources reserved by the other terminal devices in the first resource selection window are excluded according to the control information listening result.

Similar to a terminal device that performs SL transmission on a licensed spectrum, the SL UE that performs the SL transmission on an unlicensed spectrum may also perform resource exclusion on the transmission resources in the first resource selection window according to a listening result of the SL control information transmitted by other terminal devices. In the embodiments of the disclosure, the other terminal devices and the SL LTE are located in the same communication system, that is, the other terminal devices are also located in the NR SL system. The SL UE listens for the SL control information transmitted by other terminal devices in the second resource listening window. Optionally, the second resource listening window and the first resource selection window are determined simultaneously. The SL UE may learn the transmission resources reserved by the other terminal devices from the listened SL control information in a case that the SL control information is detected, so as to exclude the transmission resources reserved by the other terminal devices in the first resource selection window, thereby avoiding the resource collision with the transmission resources reserved by the other terminal devices when the SL UE selects candidate transmission resources in the first resource selection window.

For example, as shown in FIG. 9, the SL UE listens for the SL control information transmitted by other terminal devices in the first resource listening window. Assuming that the SL UE detects the SL control information transmitted by the other terminal devices at time slot i, the SL control information indicates the transmission resources reserved by other terminal devices. Assuming that the reserved transmission resources are the transmission resources corresponding to time slot u and time slot v, the SL UE may exclude the transmission resources corresponding to time slot u and time slot v in the first resource selection window according to the SL control information.

In yet another example, as shown in FIG. 8, the abovementioned operation 720 includes operation 72B that: SL control information transmitted by other terminal devices is listened for in a second resource listening window; and a transmission resource corresponding to a time domain unit associated with a seventh time domain unit in the first resource selection window is excluded according to a control information listening state.

Similar to a terminal device that performs SL transmission on a licensed spectrum, the SL LTE that performs the SL transmission on an unlicensed spectrum may also perform resource exclusion on the transmission resources in the first resource selection window according to the control information listening state. In the embodiments of the disclosure, the SL UE listens for SL control information transmitted by the other terminal devices in the first resource selection window. At a certain time domain unit in the first resource listening window, the SL LTE may not listen for the SL control information due to transmission of communication information. At this moment, the SL UE excludes the transmission resources in a time domain unit corresponding to the certain time domain unit in the first resource selection window according to the certain time domain unit and a resource reservation period set.

For example, as shown in FIG. 9, the SL UE does not perform listening for the SL control information at time slot m in the first resource listening window. The SL UE may determine the time domain unit corresponding to time slot m in the first resource selection window according to time slot m and the resource reservation period set, and exclude the transmission resources in the time domain unit.

The description of a process of performing resource exclusion and resource selection by the SL UE when SL transmission is performed on the basis of the unlicensed spectrum here may be obtained according to the description of the process of performing resource exclusion and resource selection by the terminal device when the SL transmission is performed on the basis of the licensed spectrum. Specific description about performing the resource exclusion by the SL UE according to the control information listening result and the control information listening state in the second resource listening window refers to the abovementioned method embodiments, which will not elaborated herein.

A point to be noted is that in a case that the resource exclusion and the resource selection are performed on the unlicensed spectrum, if the remaining transmission resources in the first resource selection window after the resource exclusion is less than X%, such as 20%, of the total transmission resources before the resource exclusion, the SL UE may increase the SL-RSRP threshold by a certain value, such as 3 dB, and perform resource exclusion again.

Another point to be noted is that the SL UE may perform the resource exclusion by comprehensively using all or part of the above several resource exclusion manners, or may perform the resource exclusion by separately using one of the above several resource exclusion manners. No limits are made thereto in the embodiments of the disclosure.

In conclusion, according to the technical solutions provided by the embodiments of the disclosure, the terminal device performs channel detection for a time domain unit that triggers resource selection, and performs resource exclusion on the transmission resources in the resource selection window according to a channel detection result. The channel detection result includes that LBT fails or the channel is busy, so that the terminal device may exclude the transmission resources that may not transmit the communication information in a resource selection window, thereby avoiding that the candidate transmission resources selected by the terminal device cannot transmit communication information because the transmission channel is busy, and improving the communication reliability.

Moreover, according to the technical solutions provided by the embodiments of the disclosure, the terminal device listens for communication packets transmitted by the communications device in the heterogeneous, and decodes the listened communications packet, to determine the transmission resources occupied by the communication device in the heterogeneous system, thereby excluding the transmission resources in the resource selection window that are occupied by the communication device in the heterogeneous. The resource collision between the candidate transmission resources selected by the terminal device and the transmission resources occupied by the communication device in the heterogeneous system can be avoided, the factor affecting the communication quality is fully considered, and the communication reliability is improved.

In addition, according to the technical solutions provided by the embodiments of the disclosure, the terminal device listens, in the resource listening window, for SL control information transmitted by other terminal devices in the communication system where the terminal device is located, learns the transmission resources reserved by the other terminal devices, so as to exclude the transmission resources reserved by the other terminal devices in the resource selection window, thereby avoiding the resource collision between the candidate transmission resources selected by the terminal device and the transmission resources reserved by the other terminal devices, and improving the communication reliability.

In addition, according to the technical solutions provided by the embodiments of the disclosure, the terminal device listens, in the resource listening window, for SL control information transmitted by other terminal devices in the communication system where the terminal device is located. When some time domain units do not perform SL control information listening, the transmission resources in time domain units corresponding to the time domain units in the resource selection window are excluded according to the time domain units and a resource reservation period set, so that the terminal device can be prevented from missing the transmission resources reserved by the other terminal devices because the terminal device does not perform SL control information listening, the resource collision between the candidate transmission resources selected by the terminal device and the transmission resources reserved by the other terminal devices is further avoided, and the communication reliability is further improved.

In the embodiments of the disclosure, after the SL UE performs resource selection and before communication information is transmitted by using the selected transmission resources, resource re-evaluation may also be performed on the selected transmission resources. A process of the resource re-evaluation is described below.

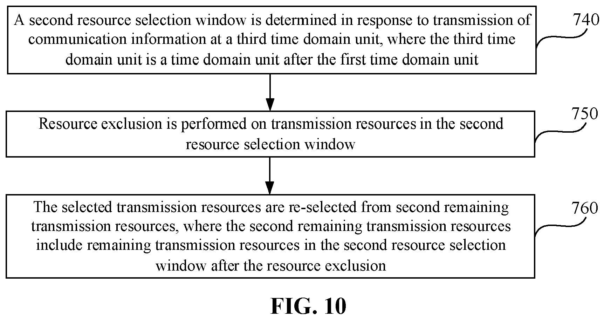

In an example, as shown in FIG. 10, the abovementioned method further includes the following operations.

At operation 740, a second resource selection window is determined in response to transmission of communication information at a third time domain unit. The third time domain unit is a time domain unit after the first time domain unit.

Before the SL UE transmits the communication information, the SL UE may perform re-evaluation on the transmission resources that transmit the communication information and subsequent transmission resources, so as to ensure that the transmission resources that transmit the communication information and the subsequent transmission resources do not collide with other transmission resources, and ensure that the transmission resources that transmit the communication information and the subsequent transmission resources may be used for transmission of communication information, which adapts to the characteristic that available time-frequency resources change continuously, fully considers the factors affecting the communication quality, and improves the communication reliability.

Assuming that the SL UE will transmit the communication information at the third time domain unit, the SL UE determines a second resource selection window. The transmission resources for transmitting the communication information and the subsequent transmission resources of the SL LTE need to be located in the second resource selection window. Optionally, in order to ensure that the SL UE has enough processing time to determine whether resource re-evaluation is needed before transmitting the communication information, and performs resource re-evaluation in a case that the resource re-evaluation is needed. The abovementioned operation that the second resource selection window is determined includes that: the second resource selection window is determined at a sixth time domain unit. The sixth time domain unit is a time domain unit before the third time domain unit. The time domain interval between the sixth time domain unit and the third time domain unit includes a duration that the terminal device performs resource selection.

For example, assuming that the SL LTE needs to transmit the communication information at time slot p, the SL UE determines the second resource selection window at time slot p-T3 or before time slot p-T3. T3 is a duration that the SL UE performs resource selection. Assuming that the SL UE determines the second resource selection window at time slot p-T3, the time domain range occupied by the second resource selection window is from time slot p-T3+T21 to time slot p-T3+T22. The description of the values of T21 and T22 refer to the abovementioned description of the values of the T1 and T2, which will not be elaborated herein.

At operation 750, resource exclusion is performed on transmission resources in the second resource selection window.

After determining the second resource selection window, the SL UE may perform the resource exclusion on the transmission resources in the second resource selection window according to a certain resource exclusion condition, so as to exclude, in the second resource selection window, the transmission resources occupied by the communication device in a heterosystem, the transmission resources reserved by other terminal devices, and the transmission resources that cannot transmit the communication information, thereby improving the communication reliability.

Optionally, the abovementioned operation that the resource exclusion is performed on the transmission resources in the second resource selection window includes that: at least one of a transmission resource located in a fourth time domain unit in the second resource selection window or transmission resources before the fourth time domain unit in the second resource selection window are excluded according to a second channel detection result; and/or, the transmission resources in the second resource selection window that are occupied by a communication device in a heterosystem are excluded according to an information listening result of the heterosystem; and/or, transmission resources reserved by the other terminal devices in the second resource selection window are excluded according to a control information listening result; and/or, a transmission resource corresponding to a time domain unit associated with a fifth time domain unit in the second resource selection window is excluded according to a control information listening state. The control information listening state includes that SL control information listening is not performed at the fifth time domain unit, and the fifth time domain unit is a time domain unit before the third time domain unit.

The above several descriptions of the manners of performing resource exclusion on the second resource selection window may refer to the description of the manner of performing the resource exclusion on the first resource selection window, which will not be elaborated herein.

For example, it is assumed that the SL LTE determines that the time domain range occupied by the second resource selection window is from time slot p-T3+T21 to time slot p-T3+T22. In a case that the SL LTE performs resource exclusion according to a second channel detection result, it is assumed that the SL UE determines that LBT fails or the channel is busy at time slot p-T3, then it is determined that the SL UE cannot access the channel at time slot p-T3, and then the SL UE excludes the transmission resources from time slot p-T3 to p-T3+D and/or the transmission resources on time slot p-T3+D. The value of D is associated with the maximum value of the COT on the unlicensed spectrum. In a case that the SL UE performs resource exclusion according to the information listening result of the heterosystem, assuming that the SL UE listens for the communication packets transmitted by a communication device in the heterosystem at a certain time slot in a third resource listening window, then the SL UE excludes the transmission resources in the second resource selection window that are occupied by the communication device in the heterosystem. In a case that the SL UE performs resource exclusion according to a control information listening result, the SL UE excludes the transmission resources reserved by other terminal devices in the second resource selection window according to SL control information listened in a fourth resource listening window. In a case that the SL LTE performs resource exclusion according to a control information listening state, the SL UE excludes the transmission resources in a time slot corresponding to the time slot that does not listen for SL control information in the second resource selection window according to whether the SL UE listens for the SL control information in the fourth resource listening window. The third resource listening window may be identical to the fourth resource listening window, or may be different from the fourth resource listening window. For example, assuming that the fourth resource selection window is [p-T3-T20, p-T3-Tproc,0), the third resource selection window may be [p-T3-T20, p-T3-Tproc,0), or may also be an independent resource listening window different from the fourth resource listening window, such as [p-T3-Tq, p-T3-Tproc,0). No limits are made thereto in the embodiments of the disclosure.

At operation 760, the selected transmission resources are re-selected from second remaining transmission resources. The second remaining transmission resources include remaining transmission resources in the second resource selection window after the resource exclusion.

After the SL LTE performs resource exclusion on the second resource selection window, second remaining transmission resources are obtained. The SL UE subsequently re-selects the selected transmission resources, that is, the transmission resources that transmit the communication information and subsequent transmission resources are both re-selected from the second remaining transmission resources. Moreover, the SL UE determines whether to re-select the selected transmission resources, that is, whether to re-select the transmission resources that transmit the communication information and the subsequent transmission resources according to whether the transmission resources is located in the second remaining resources.

In conclusion, according to the technical solutions provided by the embodiments of the disclosure, before transmitting the communication information, a resource selection window is determined, resource exclusion is performed on the resource selection window, and the selected transmission resources are re-selected from the resource selection window after the resource exclusion, which provides a resource re-evaluation manner, so as to ensure that the transmission resources that transmit the communication information and the subsequent transmission resources do not collide with other transmission resources, and ensure that the transmission resources that transmit the communication information and the subsequent transmission resources may be used for transmission of communication information, which adapts to the characteristic that available time-frequency resources change continuously, fully considers the factors affecting the communication quality, and improves the communication reliability.

The embodiments of the disclosure further provide several occasions to trigger resource re-evaluation, and resource re-evaluation processes. The several occasions to trigger the resource re-evaluation and resource re-evaluation processes are described below.

In an example, the abovementioned communication information includes first SL control information. Transmission resources indicated by the first SL control information include transmission resources not indicated by second SL control information; and the second SL control information is SL control information transmitted before the first SL control information and used to indicate at least one of the selected transmission resources.

That is, a manner of triggering the SL LTE to perform resource re-evaluation is that transmission resources not indicated by SL control information transmitted previously exist in the transmission resources indicated by SL control information to be transmitted by the SL UE. Assuming that the SL control information to be transmitted by the SL UE is first SL control information, and the SL control information transmitted previously by the SL UE is second SL control information, then the transmission resources not indicated by the second SL control information exist in the transmission resources indicated by the first SL control information. In this case, the SL UE may determine that whether the transmission resources that are not indicated are located in the second remaining transmission resources, so as to determine whether to perform resource re-evaluation on the transmission resources that are not indicated and other selected transmission resources.

Optionally, the abovementioned operation 760 includes that: in a case that a first transmission resource exists, at least one of the first transmission resource or the selected transmission resources is re-selected from the second remaining transmission resources. The first transmission resource is a transmission resource not indicated by the second SL control information in the transmission resources indicated by the first SL control information, and the first transmission resource is located beyond the second remaining transmission resources.

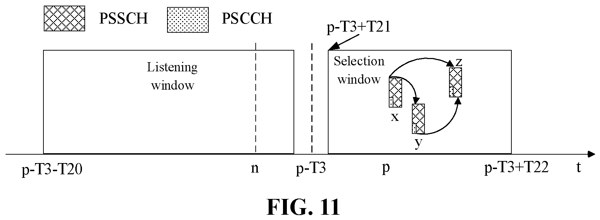

In a case that the SL LTE determines that the transmission resources that are not indicated are located beyond the second remaining transmission resources, resource re-evaluation may be performed on the transmission resources that are located beyond the second remaining transmission resources and are not indicated, or the resource re-evaluation may be performed on any transmission resource that has been selected but is not indicated by the SL control information. No limits are made thereto in the embodiments of the disclosure. For example, as shown in FIG. 11, it is assumed that the SL LTE transmits the first SL control information at time slot p. The first SL control information indicates transmission resources x, y, and z, and the transmission resources x, y, and z are not indicated by other SL control information. Assuming that the SL UE determines that the transmission resource y is located beyond the second remaining transmission resources, the SL UE may re-select the transmission resource y, or the SL UE may re-select the transmission resources x, y, and z.

In another example, the abovementioned operation that the second resource selection window is determined includes that: channel detection is performed on a sixth time domain unit; and the second resource selection window is determined in a case that a second channel detection result is obtained according to the channel detection.

In the embodiments of the disclosure, the second channel detection result includes that the LBT fails and/or the channel is busy, that is, a manner of triggering the SL UE to perform resource re-evaluation is that the LBT performed by the SL UE fails and/or the channel is busy. In the embodiments of the disclosure, the sixth time domain unit is a time domain unit before the third time domain unit, and the time domain interval between the sixth time domain unit and the third time domain unit includes the duration that the SL UE performs resource selection. The SL UE performs channel detection for the sixth time domain unit. A process related to the channel detection refers to the abovementioned method embodiments, which will not be elaborated herein. In a case that the channel detection result of the SL UE for the sixth time domain unit is that the LBT fails or the channel is busy, the SL LTE determines that resource re-evaluation may be performed on the transmission resources on the third time domain unit, so that the SL UE determines the second resource selection window at the sixth time domain unit, thereby performing a subsequent resource exclusion process on the second resource selection window.

Optionally, the abovementioned operation 760 includes that: the transmission resource corresponding to the third time domain unit is re-selected from the second remaining transmission resources. That is, the second remaining transmission resources are obtained after the SL LTE performs resource exclusion on the second resource selection window. In order to ensure that the transmission resource corresponding to the third time domain unit may be used for transmitting communication data without resource collision, the SL UE re-selects the transmission resource corresponding to the third time domain unit from the second remaining transmission resources.

Optionally, in the process of re-selecting the transmission resource corresponding to the third time domain unit, if the SL UE finds that other selected transmission resources are located beyond the second remaining transmission resources, the other selected transmission resources may also be re-selected. That is, the abovementioned method further includes that: in a case that a second transmission resource exists, the second transmission resource is re-selected from the second remaining transmission resources. A time domain unit corresponding to the second transmission resource is a time domain unit after the third time domain unit, and the second transmission resource is a transmission resource located beyond the second remaining transmission resources in the selected transmission resources.

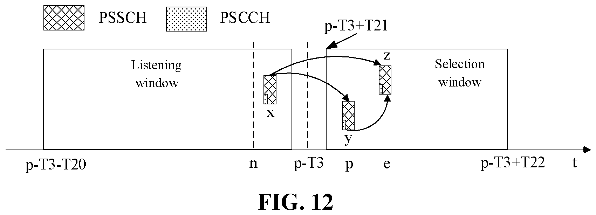

For example, as shown in FIG. 12, the SL LTE transmits communication data at time slot p. In a case that the SL UE determines that the LBT fails or the channel is busy at time slot p-T3, it is determined that the SL LTE cannot access the channel at time slot p-T3, and the SL UE re-selects the transmission resource y corresponding to time slot p. If the SL UE finds that the transmission resource z corresponding to time slot e is also located beyond the second remaining transmission resources in the process of re-selecting the transmission resource y corresponding to time slot p, the SL UE also re-selects the transmission resource z corresponding to time slot e from the second remaining transmission resources.

In conclusion, according to the technical solutions provided by the embodiments of the disclosure, a manner of triggering resource re-evaluation is provided by performing resource re-evaluation in a case that a transmission resource not indicated by other SL control information exists in the transmission resources indicated by the SL control information to be transmitted. Moreover, in the embodiments of the disclosure, in a case that a transmission resource not indicated by the previously transmitted SL control information exists in the transmission resources indicated by the SL control information to be transmitted, and the transmission resource not indicated by the previously transmitted SL control information is located beyond the resource selection window after resource exclusion, the transmission resource or the selected transmission resources may be re-selected, so that a terminal device may flexibly determine the resource re-evaluation process according to its own processing overhead and the like, which improves the flexibly of the terminal device in resource re-evaluation.

In addition, according to the technical solutions provided by the embodiments of the disclosure, another manner of triggering resource re-evaluation is provided by performing channel detection before transmission of communication information and performing resource re-evaluation in a case that the channel detection result is that LBT fails or the channel is busy. Moreover, in the embodiments of the disclosure, in the process of re-selecting the transmission resources for transmission of the communication information, if it is found that other selected transmission resources are located beyond the resource selection window after the resource exclusion, the terminal device may also re-select the other selected transmission resources, so as to adjust the transmission resources in time, which avoids that the terminal device needs to perform the resource re-evaluation process for a plurality of times subsequently, improves the efficiency of performing resource re-evaluation by the terminal device, and improves the communication reliability.

The following are apparatus embodiments of the disclosure, which may be configured to implement the method embodiments of the disclosure. Details undisclosed in the apparatus embodiments of the disclosure may refer to the method embodiments of the present disclosure.

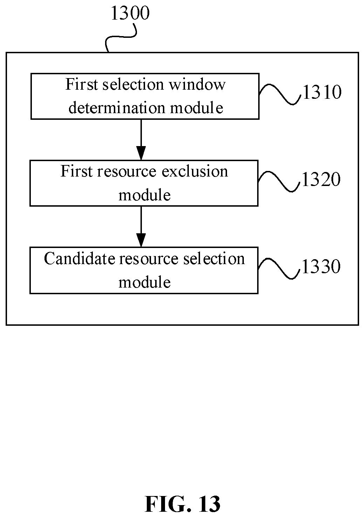

Reference is made to FIG. 13, which illustrates a block diagram of an apparatus for resource selection according to an embodiment of the disclosure. The apparatus has the functions for implementing the abovementioned method examples, the functions may be implemented by hardware, or may also be implemented by hardware executing corresponding software. The apparatus may be a terminal device that performs SL transmission on an unlicensed spectrum as described above, or may also be arranged in the terminal device that performs the SL transmission on the unlicensed spectrum. As shown in FIG. 13, the apparatus 1300 may include: a first selection window determination module 1310, a first resource exclusion module 1320, and a candidate resource selection module 1330.

The first selection window determination module 1310 is configured to determine a first resource selection window at a first time domain unit.

The first resource exclusion module 1320 is configured to perform resource exclusion on transmission resources in the first resource selection window according to a first resource exclusion condition. The first resource exclusion condition includes at least one of a first channel detection result or a first information listening result.

The candidate resource selection module 1330 is configured to select candidate transmission resources used for transmitting communication information from first remaining transmission resources. The first remaining transmission resources include remaining transmission resources in the first resource selection window after the resource exclusion.

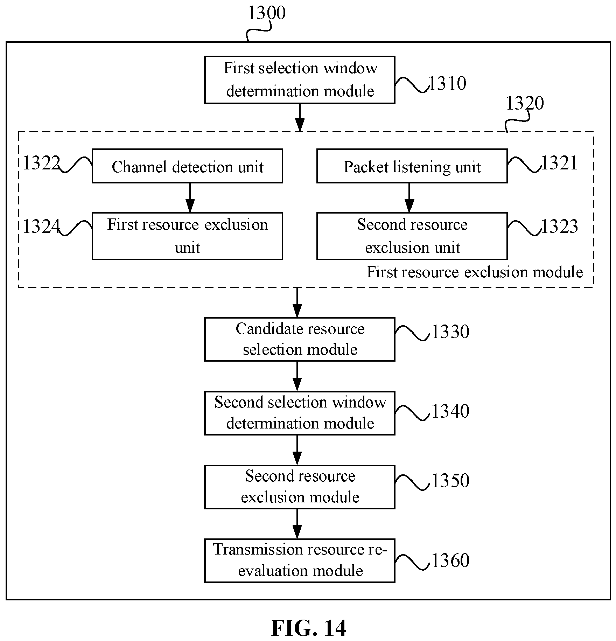

In an example, the first resource exclusion condition includes the first channel detection result. As shown in FIG. 14, the first resource exclusion module 1320 includes: a channel detection unit 1322, configured to perform channel detection for the first time domain unit, to obtain the first channel detection result; and a first resource exclusion unit 1324, configured to exclude at least one of a transmission resource located in a second time domain unit in the first resource selection window or transmission resources located before the second time domain unit in the first resource selection window according to the first channel detection result. The second time domain unit is a time domain unit after the first time domain unit.

In an example, a time domain interval between the second time domain unit and the first time domain unit is associated with an upper limit value of a COT on the unlicensed spectrum.

In an example, as shown in FIG. 14, the channel detection unit 1324 is configured to channel detection at at least one of the first time domain unit or a time domain unit before the first time domain unit.

In an example, the channel detection includes LBT, and the first channel detection result includes that the LBT fails; and/or, the channel detection includes channel listening, and the first channel detection result includes that a channel is busy.

In an example, the first resource exclusion condition includes the first information listening result. As shown in FIG. 14, the first resource exclusion module 1320 includes: a packet listening unit 1321, configured to listen, in a first resource listening window, for communication packets transmitted by a communication device in a heterosystem, to obtain the first information listening result; and a second resource exclusion unit 1323, configured to exclude, according to the first information listening result, transmission resources in the first resource listening window that are occupied by the communication device in the heterosystem.

In an example, the first information listening result includes transmission resources occupied by the communication device in the heterosystem.

In an example, the heterosystem includes a WiFi system.

In an example, the first resource listening window is identical to a second resource listening window; or the first resource listening window is different from the second resource listening window. The second resource listening window is used to listen for communication information transmitted by other terminal devices.

In an example, as shown in FIG. 14, the apparatus 1300 further includes: a second selection window determination module 1340, configured to determine a second resource selection window in response to transmission of communication information at a third time domain unit. The third time domain unit is a time domain unit after the first time domain unit; a second resource exclusion module 1350, configured to perform resource exclusion on transmission resources in the second resource selection window; and a transmission resource re-evaluation module 1360, configured to re-select the selected transmission resources from second remaining transmission resources. The second remaining transmission resources include remaining transmission resources in the second resource selection window after the resource exclusion.

In an example, as shown in FIG. 14, the second resource exclusion module 1350 is configured to: exclude at least one of a transmission resource located in a fourth time domain unit in the second resource selection window or transmission resources before the fourth time domain unit in the second resource selection window according a second channel detection result; and/or, exclude transmission resources in the second resource listening window that are occupied by a communication device in a heterosystem according to an information listening result of the heterosystem; and/or, exclude transmission resources reserved by other terminal devices in the second resource selection window according to a control information listening result; and/or, exclude a transmission resource corresponding to a time domain unit associated with a fifth time domain unit in the second resource selection window according to a control information listening state. The control information listening state includes that SL control information listening is not performed in the fifth time domain unit, and the fifth time domain unit is a time domain unit before the third time domain unit.

In an example, the second selection window determination module 1340 is configured to: determine the second resource selection window at a sixth time domain unit. The sixth time domain unit is a time domain unit before the third time domain unit, and a time domain interval between the sixth time domain unit and the third time domain unit includes a duration for the terminal device to perform resource selection.

In an example, the communication information includes first SL control information; transmission resources indicated by the first SL control information include transmission resources not indicated by second SL control information; and the second SL control information is SL control information transmitted before the first SL control information and used to indicate at least one of the selected transmission resources.

In an example, as shown in FIG. 14, the transmission resource re-evaluation module 1360 is configured to: in a case that a first transmission resource exists, re-select at least one of the first transmission resource or the selected transmission resources from the second remaining transmission resources. The first transmission resource is a transmission resource not indicated by the second SL control information in the transmission resources indicated by the first SL control information, and the first transmission resource is located beyond the second remaining transmission resources.

In an example, as shown in FIG. 14, the second selection window determination module 1340 is configured to: perform channel detection for a sixth time domain unit; and determine the second resource selection window in a case that a second channel detection result is obtained according to the channel detection.

In an example, as shown in FIG. 14, the transmission resource re-evaluation module 1360 is configured to: re-select a transmission resource corresponding to the third time domain unit from the second remaining transmission resources.

In an example, as shown in FIG. 14, the transmission resource re-evaluation module 1360 is further configured to: in a case that a second transmission resource exists, re-select the second transmission resource from the second remaining transmission resources. A time domain unit corresponding to the second transmission resource is a time domain unit after the third time domain unit, and the second transmission resource is a transmission resource located beyond the second remaining transmission resources in the selected transmission resources.

In conclusion, according to the technical solutions provided by the embodiments of the disclosure, the resource selection window is determined by the terminal device that performs SL transmission on an unlicensed spectrum, resource exclusion is performed on transmission resources in the resource selection window according to a resource exclusion condition, and then candidate transmission resources are selected from remaining transmission resources in the resource selection window after the resource exclusion. A manner for the terminal device to perform resource selection in a case that the SL transmission is performed on the basis of the unlicensed spectrum is provided. In addition, in the embodiments of the disclosure, the resource exclusion condition includes a channel detection result and/or an information listening result. The channel detection result is a result obtained by the terminal device detecting a transmission channel. The resource exclusion is performed according to the channel detection result, which can prevent the candidate transmission resources selected by the terminal device from being unable to transmit communication information due to a fact that the transmission channel is busy and the like, so that the communication reliability is improved. The information listening result is a result obtained by the terminal device listening for communication packets transmitted by a communications device in a heterosystem. The transmission resources occupied by the communication device in the heterosystem may be determined by listening for the communication packets in the heterosystem. The resource exclusion is performed according to the information listening result, which can prevent the resource collision between the candidate transmission resources selected by the terminal device and the transmission resources occupied by the communication device in the heterosystem, so that the communication reliability can further be improved.

It should be noted that, when functions of the apparatus provided by the abovementioned embodiments are realized, it is only illustrated by the division of various abovementioned functional modules. In actual applications, the abovementioned functions can be assigned by different functional modules according to actual needs, that is, the content structure of the device is divided into different functional modules to complete all or part of the functions described above.

With regard to the apparatus in the above-mentioned embodiments, specific manners of performing operations by each module are described in detail in the embodiments related to the method, which is not described in detail herein.

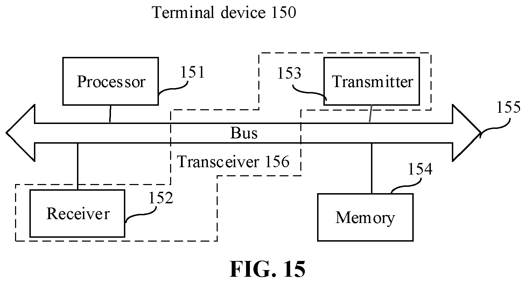

Reference is made to FIG. 15, which illustrates a schematic structural diagram of a terminal device 150 according to an embodiment of the disclosure. For example, the terminal device may be configured to execute the abovementioned method for resource selection. Specifically speaking, the terminal device 150 may include: a processor 151, a receiver 152, a transmitter 153, a memory 154, and a bus 155.

The processor 151 includes one or more processing cores. The processor 151 executes various functional applications and information processing by executing a software program and modules.

The receiver 152 and the transmitter 153 may be implemented as a transceiver 156. The transceiver 156 may be a communication chip.

The memory 154 is connected to the processor 151 through the bus 155.

The memory 154 may be configured to store a computer program. The processor 151 is configured to execute the computer program to implement various operations executed by the terminal device in the abovementioned method embodiments.

In addition, the memory 154 may be implemented by any type of volatile or nonvolatile storage devices or a combination thereof. The volatile or nonvolatile storage devices include, but are not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or other solid-state storage technologies, a Compact Disc Read-Only Memory (CD-ROM), a Digital Video Disc (DVD), or other optical storage devices, magnetic tape cassettes, magnetic tapes, magnetic disk storage devices, or other magnetic storage devices.

The processor 151 is configured to determine a first resource selection window at a first time domain unit.

The processor 151 is further configured to perform resource exclusion on transmission resources in the first resource selection window according to a first resource exclusion condition. The first resource exclusion condition includes at least one of a first channel detection result or a first information listening result.

The processor 151 is further configured to select candidate transmission resources used for transmitting communication information from first remaining transmission resources. The first remaining transmission resources include remaining transmission resources in the first resource selection window after the resource exclusion.

In an example, the first resource exclusion condition includes a first channel detection result. The processor 151 is further configured to: perform channel detection for the first time domain unit, to obtain the first channel detection result; and exclude at least one of a transmission resource located in a second time domain unit in the first resource selection window or transmission resources located before the second time domain unit in the first resource selection window according to the first channel detection result. The second time domain unit is a time domain unit after the first time domain unit.

In an example, a time domain interval between the second time domain unit and the first time domain unit is associated with an upper limit value of a COT on the unlicensed spectrum.

In an example, the processor 151 is further configured to: perform channel detection at at least one of the first time domain unit or a time domain unit before the first time domain unit.

In an example, the channel detection includes LBT, and the first channel detection result includes that the LBT fails; and/or, the channel detection includes channel listening, and the first channel detection result includes that a channel is busy.

In an example, the first resource exclusion condition includes the first information listening result. The processor 151 is further configured to: listen, in a first resource listening window, for communication packets transmitted by a communication device in a heterosystem, to obtain the first information listening result; and exclude, according to the first information listening result, transmission resources in the first resource listening window that are occupied by the communication device in the heterosystem.

In an example, the first information listening result includes transmission resources occupied by the communication device in the heterosystem.

In an example, the heterosystem includes a WiFi system.

In an example, the first resource listening window is identical to a second resource listening window; or the first resource listening window is different from the second resource listening window. The second resource listening window is used to listen for communication information transmitted by other terminal devices.

In an example, the processor 151 is further configured to: determine a second resource selection window in response to transmission of communication information at a third time domain unit. The third time domain unit is a time domain unit after the first time domain unit; perform resource exclusion on transmission resources in the second resource selection window; and re-select the selected transmission resources from second remaining transmission resources. The second remaining transmission resources include remaining transmission resources in the second resource selection window after the resource exclusion.

In an example, the processor 151 is further configured to: exclude at least one of a transmission resource located in a fourth time domain unit in the second resource selection window or transmission resources before the fourth time domain unit in the second resource selection window according a second channel detection result; and/or, exclude transmission resources in the second resource listening window that are occupied by a communication device in a heterosystem according to an information listening result of the heterosystem; and/or, exclude transmission resources reserved by other terminal devices in the second resource selection window according to a control information listening result; and/or, exclude a transmission resource corresponding to a time domain unit associated with a fifth time domain unit in the second resource selection window according to a control information listening state. The control information listening state includes that SL control information listening is not performed in the fifth time domain unit, and the fifth time domain unit is a time domain unit before the third time domain unit.

In an example, the processor 151 is further configured to: determine the second resource selection window at a sixth time domain unit. The sixth time domain unit is a time domain unit before the third time domain unit, and a time domain interval between the sixth time domain unit and the third time domain unit includes a duration for the terminal device to perform resource selection.

In an example, the communication information includes first SL control information; transmission resources indicated by the first SL control information include transmission resources not indicated by second SL control information; and the second SL control information is SL control information transmitted before the first SL control information and used to indicate at least one of the selected transmission resources.

In an example, the processor 151 is further configured to: in a case that a first transmission resource exists, re-select at least one of the first transmission resource or the selected transmission resources from the second remaining transmission resources. The first transmission resource is a transmission resource not indicated by the second SL control information in the transmission resources indicated by the first SL control information, and the first transmission resource is located beyond the second remaining transmission resources.

In an example, the processor 151 is further configured to: perform channel detection for a sixth time domain unit; and determine the second resource selection window in a case that a second channel detection result is obtained according to the channel detection.

In an example, the processor 151 is further configured to: re-select a transmission resource corresponding to the third time domain unit from the second remaining transmission resources.

In an example, the processor 151 is further configured to: in a case that a second transmission resource exists, re-select the second transmission resource from the second remaining transmission resources. A time domain unit corresponding to the second transmission resource is a time domain unit after the third time domain unit, and the second transmission resource is a transmission resource located beyond the second remaining transmission resources in the selected transmission resources.

The embodiments of the disclosure further provide a computer readable storage medium storing a computer program. The computer program is executed by a processor of a terminal device to implement the abovementioned method for resource selection.

The embodiments of the disclosure further provide a chip including a programmable logic circuit and/or program instructions. The chip is configured to implement the abovementioned method for resource selection when running on a terminal device.

The disclosure further provides a computer program product, which, when running on a terminal device, cause a computer to perform the abovementioned method for resource selection.

A person skilled in the art should be aware that in the foregoing one or more examples, the functions described in the embodiments of the disclosure may be implemented by hardware, software, firmware, or any combination thereof. When software is used for implementation, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any available medium accessible by a general-purpose or dedicated computer.

The above is only exemplary embodiments of the disclosure and is not intended to limit the disclosure. Any modifications, equivalent replacements, improvements and the like made within the spirit and principle of the disclosure shall fall within the scope of protection of the disclosure.

## Claims

1. A method for resource selection, applied to a terminal device performing Sidelink (SL) transmission on an unlicensed spectrum, the method comprising:
determining a first resource selection window at a first time domain unit;
performing resource exclusion on transmission resources in the first resource selection window according to a first resource exclusion condition, wherein the first resource exclusion condition comprises at least one of a first channel detection result or a first information listening result; and
selecting candidate transmission resources used for transmitting communication information from first remaining transmission resources, wherein the first remaining transmission resources comprise remaining transmission resources in the first resource selection window after the resource exclusion.

2. The method of claim 1, wherein the first resource exclusion condition comprises the first channel detection result; and the performing resource exclusion on the transmission resources in the first resource selection window according to the first resource exclusion condition comprises:
performing channel detection for the first time domain unit, to obtain the first channel detection result; and
excluding at least one of a transmission resource located in a second time domain unit in the first resource selection window or transmission resources located before the second time domain unit in the first resource selection window according to the first channel detection result, wherein the second time domain unit is a time domain unit after the first time domain unit.

3. The method of claim 2, wherein a time domain interval between the second time domain unit and the first time domain unit is associated with an upper limit value of a Channel Occupancy Time (COT) on the unlicensed spectrum.

4. The method of claim 2 or 3, wherein the performing channel detection for the first time domain unit comprises:
performing channel detection at at least one of the first time domain unit or a time domain unit before the first time domain unit.

5. The method of any one of claims 2 to 4, wherein at least one of the following applies:
the channel detection comprises Listen Before Talk (LBT), and the first channel detection result comprises that the LBT fails; or
the channel detection comprises channel listening, and the first channel detection result comprises that a channel is busy.

6. The method of any one of claims 1 to 5, wherein the first resource exclusion condition comprises the first information listening result; and the performing resource exclusion on the transmission resources in the first resource selection window according to the first resource exclusion condition comprises:
listening, in a first resource listening window, for communication packets transmitted by a communication device in a heterosystem, to obtain the first information listening result; and
excluding, according to the first information listening result, transmission resources in the first resource listening window that are occupied by the communication device in the heterosystem.

7. The method of claim 6, wherein the first information listening result comprises transmission resources occupied by the communication device in the heterosystem.

8. The method of claim 6 or 7, wherein the heterosystem comprises a Wireless-Fidelity (WiFi) system.

9. The method of any one of claims 6 to 8, wherein the first resource listening window is identical to a second resource listening window; or the first resource listening window is different from the second resource listening window,
wherein the second resource listening window is used to listen for communication information transmitted by other terminal devices.

10. The method of any one of claims 1 to 9, further comprising:
determining a second resource selection window in response to transmission of communication information at a third time domain unit, wherein the third time domain unit is a time domain unit after the first time domain unit;
performing resource exclusion on transmission resources in the second resource selection window; and
re-selecting the selected transmission resources from second remaining transmission resources, wherein the second remaining transmission resources comprise remaining transmission resources in the second resource selection window after the resource exclusion.

11. The method of claim 10, wherein the performing resource exclusion on the transmission resource in the second resource selection window comprises at least one of:
excluding at least one of a transmission resource located in a fourth time domain unit in the second resource selection window or transmission resources before the fourth time domain unit in the second resource selection window according a second channel detection result;
excluding transmission resources in the second resource listening window that are occupied by a communication device in a heterosystem according to an information listening result of the heterosystem;
excluding transmission resources reserved by other terminal devices in the second resource selection window according to a control information listening result; or
excluding a transmission resource corresponding to a time domain unit associated with a fifth time domain unit in the second resource selection window according to a control information listening state, wherein the control information listening state comprises that SL control information listening is not performed at the fifth time domain unit, and the fifth time domain unit is a time domain unit before the third time domain unit.

12. The method of claim 10 or 11, wherein the determining the second resource selection window comprises:
determining the second resource selection window at a sixth time domain unit,
wherein the sixth time domain unit is a time domain unit before the third time domain unit, and a time domain interval between the sixth time domain unit and the third time domain unit comprises a duration for the terminal device to perform resource selection.

13. The method of any one of claims 10 to 12, wherein the communication information comprises first SL control information; transmission resources indicated by the first SL control information comprise transmission resources not indicated by second SL control information; and the second SL control information is SL control information transmitted before the first SL control information and used to indicate at least one of the selected transmission resources.

14. The method of claim 13, wherein the re-selecting the selected transmission resources from the second remaining transmission resources comprises:
in a case that a first transmission resource exists, re-selecting at least one of the first transmission resource or the selected transmission resources from the second remaining transmission resources,
wherein the first transmission resource is a transmission resource not indicated by the second SL control information in the transmission resources indicated by the first SL control information, and the first transmission resource is located beyond the second remaining transmission resources.

15. The method of any one of claims 10 to 12, wherein the determining the second resource selection window comprises:
performing channel detection for a sixth time domain unit; and
determining the second resource selection window in a case that a second channel detection result is obtained according to the channel detection.

16. The method of claim 15, wherein the re-selecting the selected transmission resources from the second remaining transmission resources comprises:
re-selecting a transmission resource corresponding to the third time domain unit from the second remaining transmission resources.

17. The method of claim 15 or 16, further comprising:
in a case that a second transmission resource exists, re-selecting the second transmission resource from the second remaining transmission resources, wherein a time domain unit corresponding to the second transmission resource is a time domain unit after the third time domain unit, and the second transmission resource is a transmission resource located beyond the second remaining transmission resources in the selected transmission resources.

18. An apparatus for resource selection, arranged in a terminal device performing Sidelink (SL) transmission on an unlicensed spectrum, the apparatus comprising:
a first selection window determination module, configured to determine a first resource selection window at a first time domain unit;
a first resource exclusion module, configured to perform resource exclusion on transmission resources in the first resource selection window according to a first resource exclusion condition, wherein the first resource exclusion condition comprises at least one of a first channel detection result or a first information listening result; and
a candidate resource selection module, configured to select candidate transmission resources used for transmitting communication information from first remaining transmission resources, wherein the first remaining transmission resources comprise remaining transmission resources in the first resource selection window after the resource exclusion.

19. The apparatus of claim 18, wherein the first resource exclusion condition comprises the first channel detection result; and the first resource exclusion module comprises:
a channel detection unit, configured to perform channel detection for the first time domain unit, to obtain the first channel detection result; and
a first resource exclusion unit, configured to exclude at least one of a transmission resource located in a second time domain unit in the first resource selection window or transmission resources located before the second time domain unit in the first resource selection window according to the first channel detection result, wherein the second time domain unit is a time domain unit after the first time domain unit.

20. The apparatus of claim 19, wherein a time domain interval between the second time domain unit and the first time domain unit is associated with an upper limit value of a Channel Occupancy Time (COT) on the unlicensed spectrum.

21. The apparatus of claim 19 or 20, wherein the channel detection unit is configured to:
perform channel detection at at least one of the first time domain unit or a time domain unit before the first time domain unit.

22. The apparatus of any one of claims 19 to 21, wherein at least one of the following applies:
the channel detection comprises Listen Before Talk (LBT), and the first channel detection result comprises that the LBT fails; or
the channel detection comprises channel listening, and the first channel detection result comprises that a channel is busy.

23. The apparatus of any one of claims 18 to 22, wherein the first resource exclusion condition comprises the first information listening result; and the first resource exclusion module comprises:
a packet listening unit, configured to listen, in a first resource listening window, for communication packets transmitted by a communication device in a heterosystem, to obtain the first information listening result; and
a second resource exclusion unit, configured to exclude, according to the first information listening result, transmission resources in the first resource listening window that are occupied by the communication device in the heterosystem.

24. The apparatus of claim 23, wherein the first information listening result comprises transmission resources occupied by the communication device in the heterosystem.

25. The apparatus of claim 23 or 24, wherein the heterosystem comprises a Wireless-Fidelity (WiFi) system.

26. The apparatus of any one of claims 23 to 25, wherein the first resource listening window is identical to a second resource listening window; or the first resource listening window is different from the second resource listening window,
wherein the second resource listening window is used to listen for communication information transmitted by other terminal devices.

27. The apparatus of any one of claims 18 to 26, further comprising:
a second selection window determination module, configured to determine a second resource selection window in response to transmission of communication information at a third time domain unit, wherein the third time domain unit is a time domain unit after the first time domain unit;
a second resource exclusion module, configured to perform resource exclusion on transmission resources in the second resource selection window; and
a transmission resource re-evaluation module, configured to re-select the selected transmission resources from second remaining transmission resources, wherein the second remaining transmission resources comprise remaining transmission resources in the second resource selection window after the resource exclusion.

28. The apparatus of claim 27, wherein the second resource exclusion module is configured to perform at least one of:
exclude at least one of a transmission resource located in a fourth time domain unit in the second resource selection window or transmission resources before the fourth time domain unit in the second resource selection window according a second channel detection result;
exclude transmission resources in the second resource listening window that are occupied by a communication device in a heterosystem according to an information listening result of the heterosystem;
exclude transmission resources reserved by other terminal devices in the second resource selection window according to a control information listening result; or
exclude a transmission resource corresponding to a time domain unit associated with a fifth time domain unit in the second resource selection window according to a control information listening state, wherein the control information listening state comprises that SL control information listening is not performed in the fifth time domain unit, and the fifth time domain unit is a time domain unit before the third time domain unit.

29. The apparatus of claim 27 or 28, wherein the second selection window determination module is configured to:
determine the second resource selection window at a sixth time domain unit,
wherein the sixth time domain unit is a time domain unit before the third time domain unit, and a time domain interval between the sixth time domain unit and the third time domain unit comprises a duration for the terminal device to perform resource selection.

30. The apparatus of any one of claims 27 to 29, wherein the communication information comprises first SL control information; transmission resources indicated by the first SL control information comprise transmission resources not indicated by second SL control information; and the second SL control information is SL control information transmitted before the first SL control information and used to indicate at least one of the selected transmission resources.

31. The apparatus of claim 30, wherein the transmission resource re-evaluation module is configured to:
in a case that a first transmission resource exists, re-select at least one of the first transmission resource or the selected transmission resources from the second remaining transmission resources,
wherein the first transmission resource is a transmission resource not indicated by the second SL control information in the transmission resources indicated by the first SL control information, and the first transmission resource is located beyond the second remaining transmission resources.

32. The apparatus of any one of claims 27 to 29, wherein the second selection window determination module is configured to:
perform channel detection for a sixth time domain unit; and
determine the second resource selection window in a case that a second channel detection result is obtained according to the channel detection.

33. The apparatus of claim 32, wherein the transmission resource re-evaluation module is configured to:
re-select a transmission resource corresponding to the third time domain unit from the second remaining transmission resources.

34. The apparatus of claim 32 or 33, wherein the transmission resource re-evaluation module is further configured to:
in a case that a second transmission resource exists, re-select the second transmission resource from the second remaining transmission resources, wherein a time domain unit corresponding to the second transmission resource is a time domain unit after the third time domain unit, and the second transmission resource is a transmission resource located beyond the second remaining transmission resources in the selected transmission resources.

35. A terminal device, comprising: a processor, and a transceiver connected to the processor, wherein
the processor is configured to determine a first resource selection window at a first time domain unit;
the processor is further configured to perform resource exclusion on transmission resources in the first resource selection window according to a first resource exclusion condition, wherein the first resource exclusion condition comprises at least one of a first channel detection result or a first information listening result; and
the processor is further configured to select candidate transmission resources used for transmitting communication information from first remaining transmission resources, wherein the first remaining transmission resources comprise remaining transmission resources in the first resource selection window after the resource exclusion.

36. A computer readable storage medium storing a computer program, which is executed by a processor of a terminal device to implement the method for resource selection according to any one of claims 1 to 17.
